# EUROPEAN PATENT APPLICATION

(11) **EP 0 857 519 A2**
(43) Date of publication of application: **12.08.1998**
(21) Application number: 98830050.5
(22) Date of filing: 05.02.1998
(51) Int. Cl.: B09B 3/00

(54) **Process for the transformation of waste materials**

(30) Priority: 05.02.1997 IT RM970054
(71) Applicant: IM.EC. Tecnologie Ecologiche S.r.l., 00198 Roma (IT)
(72) Inventor: Facchiano, Giovanni, 00121 Ostia Lido (RM) (IT)
(74) Representative: Iannone, Carlo Luigi

(57) **Abstract**

The invention concerns a process for the transformation of waste products, particularly municipal refuses and industrial and/or civil sludges, into plastic material and/or fertiliser, wherein the inorganic substances are all transformed into plastic material, while the organic substances, suitably separated, can be transformed into fertiliser, or suitably maintained into the transformation into plastic material.

## Description

The present invention relates to a process for the transformation of waste material.

More particularly, the invention concerns a process for the transformation of municipal refuses and/or industrial and civil sludges into plastic products, as well as for the transformation of civil sludges and organic substances contained within the municipal solid refuses into fertiliser.

As it is well known, at present the problem of disposal of municipal refuses and civil and industrial sludges is one of the main problems.

Disposal of municipal refuses is practically becoming an unsolved problem, being it necessary to find the place for very great dumps obviously not well accepted by communities living close to the dumps and that in any case determine ecological problems.

In this contest, different solutions to the problem have been studied, solution with different kind of philosophy.

Among the many solutions, those more interesting are technologies allowing the transformation of refuses, as well as of civil and industrial sludges, into something different, usable for different applications.

The solution proposed according to the present invention can be introduced in this specific field, and is based on the search of transforming the above mentioned products into plastic marketable products for industrial use, or into agricultural marketable products.

The industrial and civil sludges are now transported to dumps as special refuses along with municipal refuses.

The process according to the present invention provides the use of the 100% of the organic and inorganic material.

Inorganic substances can be transformed into high strength plastic material, while organic substances can be transformed into fertiliser, as well as into plastic material.

In percentage, industrial sludges contain about 100 % of inorganic substances, civil sludges about 100 % of organic substances and municipal refuses about 50 % of organic substances and 50 5 of inorganic substances.

It is therefore specific object of the present invention a process for the transformation of waste products, particularly municipal refuses and industrial and/or civil sludges, into plastic material and/or fertiliser, wherein the inorganic substances are all transformed into plastic material, while the organic substances, suitably separated, can be transformed into fertiliser, or suitably maintained into the transformation into plastic material.

Preferably, for the transformation of said products into plastic material, it is provided the separation of iron and similar materials from municipal refuses, then a first slow grinding of the material is carried out, and, in case it must be also transformed into fertiliser, the separation between organic substances and inorganic substances is carried out, then the material is introduced within a homogenizer for its micronization and then the exceeding water is separated, and they are mixed with civil and/or industrial sludges.

In case organic substances are present within municipal refuses, a dehumidification and degassing treatment is carried out.

According to a preferred embodiment of the process according to the invention, the following steps are carried out for the transformation of the inorganic substances into plastic material:
- civil sludges and/or municipal refuses are in case separated from the organic substance for the transformation into agricultural fertiliser;
- the inorganic compound is mixed along with the industrial sludge and introduced within a dehumidificator to completely separate water and digestion biological gases;
- the product thus obtained is mixed with a resin, chosen among the following: polyester resin, thermoplastic resin, acrylic resin, anionic resin, cationic resin, phenolic resin, glycerophtalic resin, melaminic resin, synthetic resin, thermo-hardening resin, ureic resin, uredic resin, siliconic resin;
- resin is mixed with a catalyst in a percentage comprised between 2% and 10% (organic peroxide) and eventually an accelerating compound in percentage between 0,2 % and 1 % (naphtalate cobalt), so as to obtain the transformation process in about 60 minutes.

Resins to be used can be of the fourth group (wastes), so as to obtain a trade cost very low.

Always according to the invention, the following steps are carried out for the transformation of the organic substances into fertiliser:
- during the dehumidification of civil sludge and organic substance of municipal refuses, about 5 % of lime and about 5 g of magnesium oxide per kg of refuses are introduced;
- within the 40 % of the treated product (having a height of 50 cm), a permanent magnet every 25 m² is introduced, the minimum weight of the magnet being 2 kg.

Particularly, before beginning the land reclamation of a desert area, a rain irrigation on the sand is carried out, so as to lower its salinity.

Substantially, in the process according to the invention, municipal refuses are conveyed on a conveyor to separate the iron percentage.

Then, they are introduced within a slow triturator for a fist grinding (in case it is necessary the material for the agricultural fertiliser, the municipal refuse is introduced within a machine (press) separating the organic from the inorganic substances).

Then, the municipal refuse is introduced within an homogenizer to be micronized, and at the end it is pressed so as to separate exceeding water,

Now, the product is coupled with civil or industrial sludges, to dehumidified and degassed.

The product requires the above mentioned treatment to let the plasticization also of the organic substance occur.

In the following, two examples of the process according to the invention are described, for illustrative but not limitative purposes.

### EXAMPLE I

Treatment for the transformation of organic substance into fertiliser.

During the dehumidification of civil sludge and of organic substance of municipal refuses, 5% in weight of lime and 5 g of magnesium oxide for each kg are introduced.

Magnesium oxide is introduced since, as it is well known, it facilitate the chlorophyll process for growing of plants, and its properties are exploited.

Furthermore, to obtain the land reclamation of a desert area, a permanent magnet every 25 m² is introduced within 40% of the treated composite (for a height of 50 cm) (the magnet must have a minimum weight of 2 kg).

This process let the sand zone to have the magnetic charge necessary to the plants during the growing.

Before beginning the land reclamation of the desert zone, a rain irrigation is carried out on the sand to lower the salinity.

Irrigation water can be sucked from the underground, for example by photovoltaic energy powered pumps.

### EXAMPLE II

Treatment for the transformation of inorganic substances into plastic component

At first, both civil sludges and municipal refuses are separated from organic substance for the transformation into agricultural fertiliser.

The inorganic compound is mixed with the industrial sludge and introduced within a dehumidificator to completely separate water and biological digestion gases (material will loose about 80 % of its weight) (separation of H₂O).

Observing dehumidified dust with a microscopy, it is noted that the structure looks like a big stone with very big caves (beside containing various inorganic particles).

A resin, such as polyester resin, thermoplastic resin, acrylic resin, anionic resin, cationic resin, phenolic resin, glycerophtalic resin, melaminic resin, synthetic resin, thermo-hardening resin, ureic resin, uredic resin, siliconic resin.

Said resins, already employed for the working of plastics materials, link and encapsulate all the organic and inorganic micronized particles.

In this way, the organic and inorganic substances are completely insulated from the air, immediately and definitively interrupting the biological process, making the material becoming a mineral having plastic properties, with a high strength and being indestructible.

Resin is mixed with 2% of a catalyst (organic peroxide) and 0,2 % of an accelerating compound (naftalate cobalt).

Accelerating compound is used in such a way to obtain the transformation process in about 60 minutes.

Resins used can be of the fourth group (wastes), in such a way to obtain a very low commercial cost.

From the above treatment, a dense paste is obtained which can be poured with different shapes so as to obtain industrial commercial products, but not food products.

Furthermore, during the preparation of the product, not including the catalyst within the mixture, a dense stable product is obtained.

In case said product is packaged within drums, it can be used for anti-seismic plastic plinths (it is obvious that at the time of use, 2% of catalyst must be used).

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Process for the transformation of waste products, particularly municipal refuses and industrial and/or civil sludges, into plastic material and/or fertiliser, wherein the inorganic substances are all transformed into plastic material, while the organic substances, suitably separated, can be transformed into fertiliser, or suitably maintained into the transformation into plastic material.

2. Process according to claim 1, characterised in that for the transformation of said products into plastic material, it is provided the separation of iron and similar materials from municipal refuses, then a first slow grinding of the material is carried out, and, in case it must be also transformed into fertiliser, the separation between organic substances and inorganic substances is carried out, then the material is introduced within a homogenizer for its micronization and then the exceeding water is separated, and they are mixed with civil and/or industrial sludges.

3. Process according to claim 1 or 2, characterised in that In case organic substances are present within municipal refuses, a dehumidification and degassing treatment is carried out.

4. Process according to one of the preceding claims, characterised in that the following steps are carried out for the transformation of the inorganic substances into plastic material:
- civil sludges and/or municipal refuses are in case separated from the organic substance for the transformation into agricultural fertiliser;
- the inorganic compound is mixed along with the industrial sludge and introduced within a dehumidificator to completely -separate water and digestion biological gases;
- the product thus obtained is mixed with a resin,
- resin is mixed with a catalyst in a percentage comprised between 2% and 10%.

5. Process according to claim 4, characterised in that besides with said catalyst, the product is mixed with an accelerating compound in percentage between 0,2 % and 1 % (naphtalate cobalt), so as to obtain the transformation process in about 60 minutes.

6. Process according to claim 4 or 5, characterised in that said resin is chosen among the following: polyester resin, thermoplastic resin, acrylic resin, anionic resin, cationic resin, phenolic resin, glycerophtalic resin, melaminic resin, synthetic resin, thermo-hardening resin, ureic resin, uredic resin, siliconic resin.

7. Process according to claim 4, 5 or 6, characterised in that said catalyst is mixed in a percentage of 2%.

8. Process according to one of the claims 4 - 7, characterised in that said catalyst is organic peroxide.

9. Process according to one of the claims 5 - 8, characterised in that said accelerating compound is mixed in an amount of 0,1%.

10. Process according to one of the claims 5 - 9, characterised in that said accelerating compound is naphtalate cobalt.

11. Process according to one of the claims 5 - 10, characterised in that resins to be used are of the fourth group (wastes).

12. Process according to one of the preceding claims, characterised in that the following steps are carried out for the transformation of the organic substances into fertiliser:
- during the dehumidification of civil sludge and organic substance of municipal refuses, about 5 % of lime and about 5 g of magnesium oxide per kg of refuses are introduced;
- within the 40 % of the treated product (having a height of 50 cm), a permanent magnet every 25 m² is introduced, the minimum weight of the magnet being 2 kg.

13. Process according to claim 12, characterised in that before beginning the land reclamation of a desert area, a rain irrigation on the sand is carried out, so as to lower its salinity.
